Europäisches Patentamt

European Patent Office

Office européen des brevets

(11) Publication number: **0 201 615**
**A1**

(12) # EUROPEAN PATENT APPLICATION

(21) Application number: **85105954.3**

(22) Date of filing: **14.05.85**

(51) Int. Cl.⁴: **B 60 P 1/64**
**B 62 D 53/06**

(43) Date of publication of application:
**20.11.86 Bulletin 86/47**

(84) Designated Contracting States:
**AT BE CH DE FR GB IT LI LU NL SE**

(71) Applicant: **X-TEN Corporation**
**855 Sansome Street**
**San Francisco California 94111(US)**

(72) Inventor: **DeWitt, Nicklas R.**
**218 Wyndham**
**Portola Valley California 94015(US)**

(74) Representative: **Dipl.-Phys.Dr. Manitz Dipl.-Ing.,**
**Dipl.-Wirtsch. Finsterwald Dipl.-Chem.Dr. Heyn**
**Dipl.-Phys. Rotermund Morgan, B.Sc.(Phys)**
**Robert-Koch-Strasse 1**
**D-8000 München 22(DE)**

(54) **Improved trailer for containerized loads.**

(57) A sliding landing gear (18) for a container trailer is operable between a first position along the trailer axis to provide ample clearance during turning for a truck tractor's rear wheels, and a second position along the trailer axis to allow the landing gear and trailer rear wheels to independently support the trailer and container combination without their tipping. A rack and pinion assembly (31, 34) is disclosed for effecting movement of the landing gear along the trailer axis. A second embodiment of the invention provides a transverse crossmember located at a rearward portion of the trailer. The crossmember is slidable between a first position, substantially between two trailer rear wheel axles, wherein a rear portion of the container is supported for even weight distribution on said two axles; and a rearward position, wherein the rear portion of the container is at a rearmost extent of the trailer axis for easy container access at a loading dock.

./...

FIG._4.

0201615

IMPROVED TRAILER FOR CONTAINERIZED LOADS

BACKGROUND OF THE INVENTION

1.    Field of the Invention

The present invention relates to the trucking industry.  More particularly the present invention relates to trailers for carrying containerized loads, wherein the containers are twenty feet or less in length. The invention provides a combination of trailer features that cooperate to overcome various problems encountered when transporting and handling containers of twenty feet or less in length.

2.    Description of the Prior Art

Shipping containers are now the accepted standard for transferring large loads by land, sea, and air.  Such containers are sealed at their point of origin and only opened at their destination, thus eliminating pilferage and vandalism.  The containers are provided in different standard sizes.

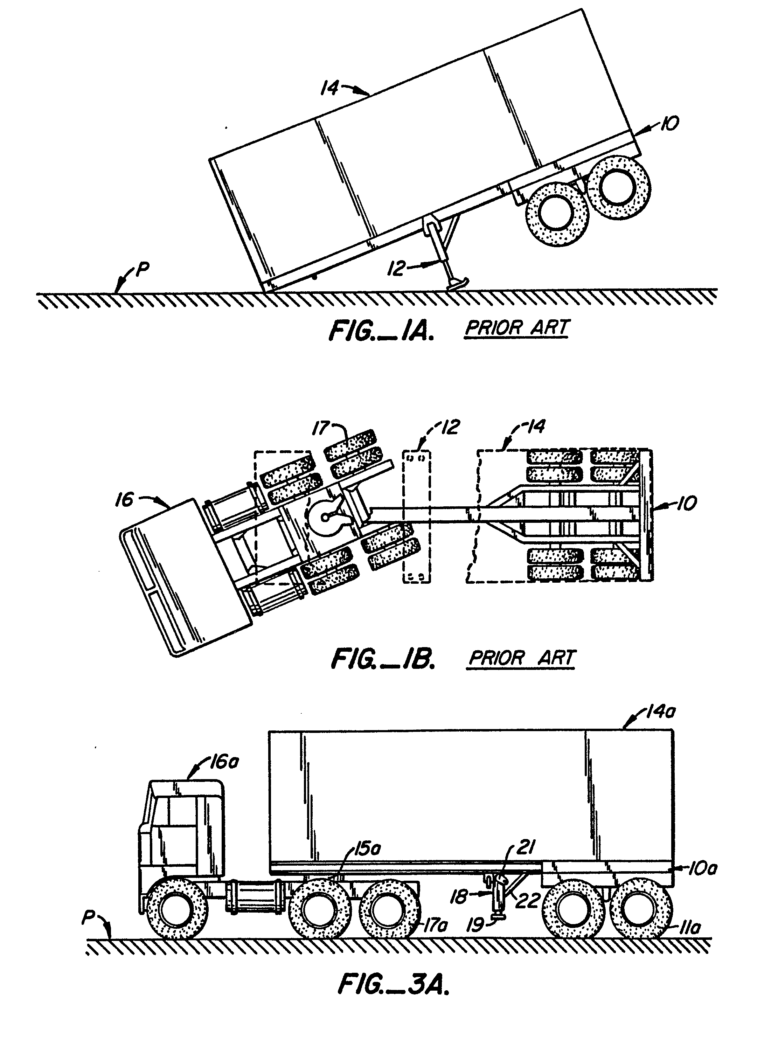

One problem that is frequently encountered when transporting smaller containers (twenty feet or less in length) on truck trailers is illustrated in Figs. 1A and 1B.  To provide sufficient turning clearance for truck tractor rear wheels 17, trailer landing gear 12 must be moved toward the center of trailer 10 away from the truck tractor rear wheels.

Generally, container 14 has an evenly distributed cargo and the trailer is thus balanced during transport.  However, when trailer 14 is solely supported by landing gear 12 and container 14 is opened for loading or unloading, more weight necessarily is placed toward the front of the trailer because the rear portion of the container is emptied first.  As a result, the front end of the trailer carries more of the container load than the rear end of the trailer, the balance of the trailer is disturbed, and the trailer tends to tip forward onto pavement P, as shown in Fig. 1A.

To prevent such tipping, landing gear 12 could be located forward along the trailer axis to shift the center of gravity of the trailer and thus balance the container load. However, there is then insufficient clearance for the rear wheels 17 of truck tractor 16 when turning, as shown in Fig. 1B.

One solution to the above problem provides a pair of pivotally mounted pipe-like trailer legs. Such legs may be folded out of the way, parallel to the trailer when a load is transported and they may be dropped down perpendicular to the trailer to support the load when the truck tractor is removed from the trailer. Such folding legs are typically unstable and difficult to set in place during coupling or uncoupling of a truck tractor with the trailer. Failure of such prior art folding legs can result in injury to workers and damage to the equipment or the cargo.

With regard to the transport of containerized loads in shipping containers of twenty feet or less in length, it is necessary to provide an even balance of the load. Most trailers adapted to carry such containers provide two rear axles, referred to as parallel or equalizer axles, each axle having four wheels. To properly transport the load, the weight of the container must be evenly distributed between the two axles of the rear wheels.

In trailers designed to carry containers in excess of twenty feet in length, a cross brace is provided transverse to the trailer positioned between the axles and the container rests thereon. For containers of twenty feet or less in length the same transverse cross brace arrangement must be used. This approach is adequate when a sealed container is loaded to or lifted from a trailer. However, such arrangement presents serious problems when loading or unloading an opened container while the container is on the trailer.

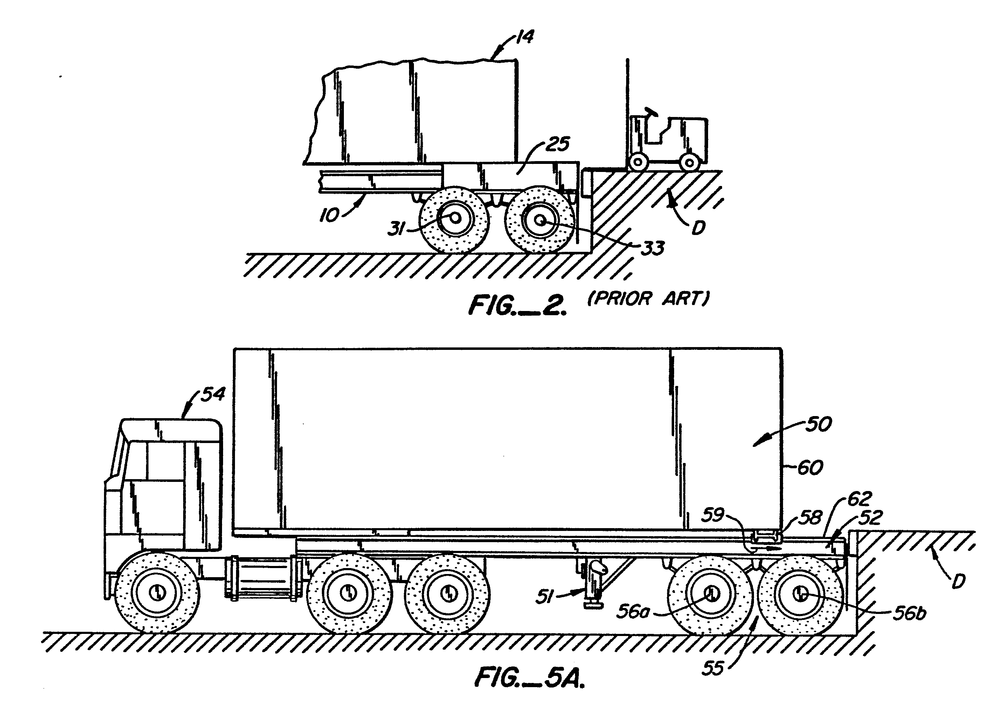

A schematic illustration of a prior art trailer and container in combination is shown in Fig. 2, in which it can be seen that a gap between the rear of container 14 and a loading dock D is created by the rear portion and rear axle of trailer 10. That is, backing the trailer flush to the loading dock does not bring the rear portion of the container, which is supported on trailer cross brace 25 at a point between rear axles 31 and 33 to the edge of the dock.

One solution to the problems of load balance and dock gap provides a trailer extension frame. The frame is extended to allow the trailer to accommodate longer containers; the frame is retracted to allow the trailer to accommodate shorter containers (twenty feet or less in length). Such extension frames are quite complex and must be constructed of heavy gauge materials to rigidly support a containerized load while cantilevered beyond the trailer rear wheels. Accordingly, such extension frames add considerable weight and cost to the trailer while reducing reliability and serviceability.

SUMMARY OF THE INVENTION

The present invention provides an improved truck tractor trailer. The invention solves the problems of load balance, tipping, wheel clearance, and dock gap by providing two embodiments which may be practiced singly, or in combination. One embodiment of the invention provides slidable landing gear that are particularly useful for trailers adapted to carry cargo containers and, in particular, cargo containers of twenty feet or less. The above-mentioned problems of trailer tipping and truck tractor rear wheel clearance are solved by a novel landing gear trailer support that is selectively slidable along a trailer axis between a trailer support position and a trailer transport position.

That is, when a truck tractor is to be uncoupled from a load bearing trailer, the landing gear are slid forward along the trailer axis to a point sufficiently past trailer center to support the loaded trailer without it tipping. Once the landing gear are slid forward, conventional landing gear pads are extended to lift the loaded trailer from the truck tractor. The truck tractor is then driven from the trailer.

When a truck tractor is to be coupled to a load bearing trailer, the truck tractor is backed to the trailer. The landing gear pads are retracted to lower the trailer onto the truck tractor and couple it therewith. The landing gear are then slid rearward along the trailer axis to a point sufficiently away from the truck tractor rear wheels to allow for ample turning clearance therebetween.

The trailer and container are securely supported against tipping when the truck tractor is removed therefrom by forward placement of the landing gear along the trailer axis. Likewise, ample truck tractor rear wheel clearance is provided by rearward placement of the landing gear rearward along the trailer axis.

Landing gear movement may be accomplished by any known motive means, including electric, pneumatic, and hydraulic motors. One embodiment of the invention provides a trailer-mounted rack and shaft-driven pinion for moving a landing gear carriage along the trailer axis between the landing gear trailer-supporting position and the landing gear trailer-transporting position.

Another embodiment of the invention addresses both the problems of load balance and wheel clearance, and that of loading and unloading a container of twenty feet or less directly at a loading dock. A sliding trailer cross brace is provided that extends transversely to the trailer along a top portion thereof and that is movable along the trailer axis. A rear portion of the container is supported by the cross brace.

When the trailer is transported, the cross brace is slid forward to a first position between the two trailer rear axles to evenly distribute the load at the rear portion of the trailer.

When a truck tractor is uncoupled from the trailer and the trailer supports a load on with its landing gear and rear wheels, or when docking a container to a loading dock, the transverse cross brace is slid rearwardly to a second position along the trailer axis, which also serves to move the container rearwardly. This obviates the problem of trailer tipping by shifting the load center of gravity rearward and, therefore, effectively shifting the landing gear forward past the load center.

The problem of loading and unloading at a dock is also obviated by the sliding cross brace because the rear portion of the container is flush with the rear portion of the trailer and thus is easily slid into a loading configuration with the dock. Such arrangement is particularly useful with an extensible trailer that allows the front supporting portion of the trailer to retract toward the rear of the trailer as the rear transverse cross brace is shifted rearwardly along the trailer.

A sliding landing gear may be provided with this embodiment of the invention or it may be dispensed with by substituting a standard landing gear therefor. If standard landing gear are provided, they are positioned rear enough from the trailer fifth wheel pin to provide ample clearance for the truck tractor rear wheels during turning.

## DESCRIPTION OF THE DRAWINGS

Fig. 1 is a schematic illustration of a prior art trailer and a container in combination;

Fig. 2 is another schematic illustration of a prior art trailer and container in combination;

Fig. 3 is a side elevational schematic view of a truck tractor and trailer/container combination showing in sequence operation of one preferred embodiment of the present invention;

Fig. 4 is a perspective view of the one preferred embodiment of the present invention;

Fig. 5 is a side elevational schematic view of a truck tractor and trailer/container combination showing in sequence operation of a second preferred embodiment of the present invention; and

Fig. 6 is a perspective view of the second preferred embodiment of the present invention.


## DESCRIPTION OF A PREFERRED AND ALTERNATE EMBODIMENTS

One embodiment of the present invention provides a sliding landing gear for a trailer of the type used to transport containers, particularly containers of twenty feet or less in length. A side elevational schematic illustration of the present invention is provided by Figs. 3A-3D.

A trailer 10a and container 14a combination is coupled to a truck tractor 16a at a fifth wheel coupling 15a (Fig. 3A). The combination is supported on pavement P by truck tractor wheels 17 and trailer wheels 11a. A landing gear 18 is positioned along the axis of trailer 10a. A crank assembly 21 is included with landing gear 18 for raising and lowering a support pad 19. A brace 22 is provided to add strength and rigidity to the landing gear.

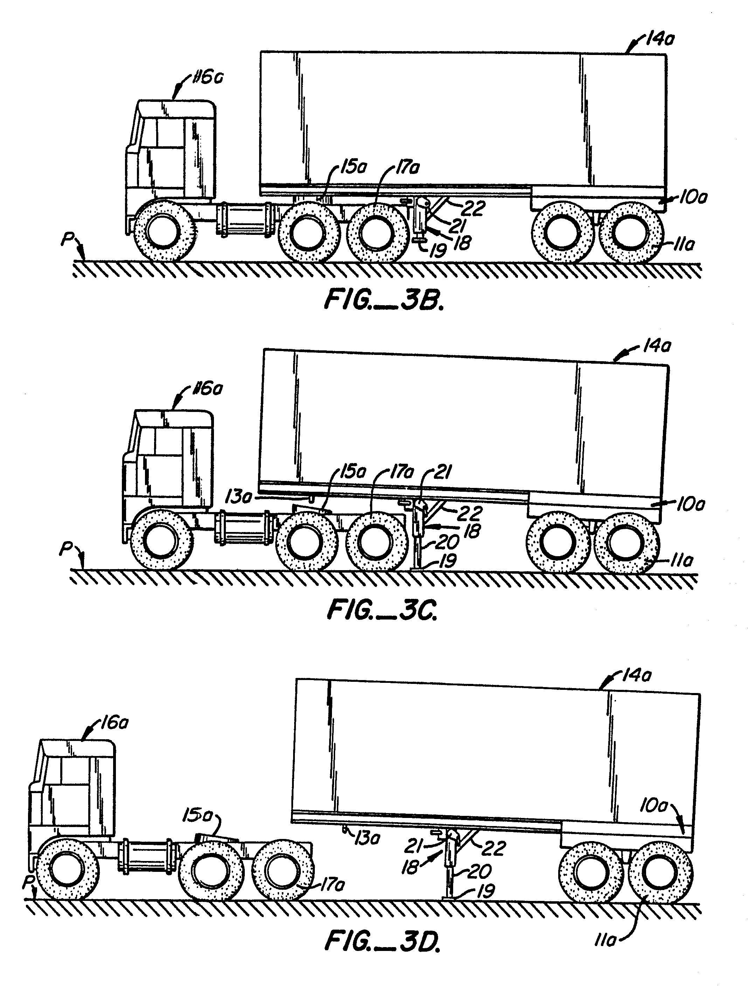

When uncoupling the trailer from the truck tractor, e.g. to load or unload container 14a, landing gear assembly 18 is slid forward along the trailer axis to a point substantially in abutment with the rear portion of truck tractor 16a (Fig. 3B). Support pad 19 is lowered by operating crank 21 to extend shaft 20 from landing gear 18 (Fig. 3C). A trailer fifth wheel pin 13a is lifted from truck tractor fifth wheel coupling 15a. The truck tractor is then driven from the trailer (Fig. 3D).

To couple the truck tractor with the trailer to transport the container with the trailer, the above procedure is repeated in reverse. That is, tractor 16a is backed to the trailer (Fig. 3D). Crank 21 is operated to retract shaft 20 within landing gear 18 and thereby lower trailer fifth wheel pin 13a to truck tractor fifth wheel coupling 15a (Fig. 3C). When trailer 10a is coupled to truck tractor 16a (Fig. 3B), landing gear 18 is moved rearwardly along the trailer axis to allow container 14a to be transported (Fig. 3A).

Thus, one embodiment of the invention provides a rigid landing gear that is operable in two selected positions:

1) a transport position in which the landing gear is moved toward a rearward portion of the trailer and in which the landing gear pads are withdrawn into the landing gear (Fig. 3A); and

2) a support position in which the landing gear are moved forward along the axis of the trailer and in which the landing gear pads are lowered to support the trailer (Fig. 3D).

In the trailer transporting/rearward landing gear position, truck tractor rear wheels 17a are provided with ample clearance to readily allow the truck tractor to turn as is necessary during trailer transport. In the trailer supporting/forward landing gear position, the trailer center of gravity is shifted forward to allow the container to be readily loaded and unloaded without tipping forward.

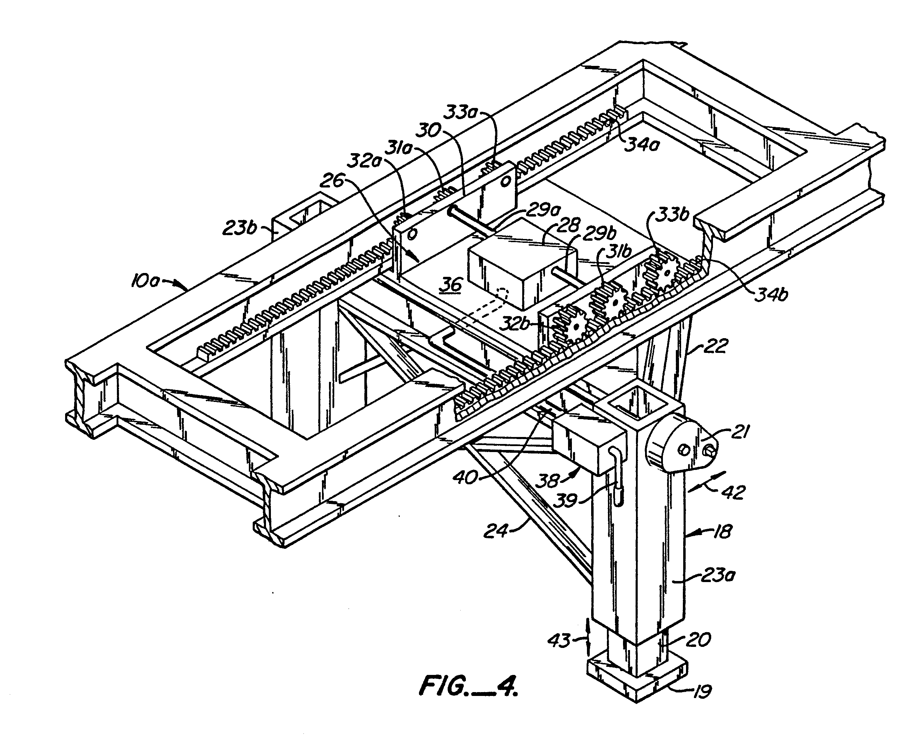

A perspective view of one preferred embodiment of the invention is shown in Fig. 4. Landing gear assembly 18 includes a brace 22 and a cross brace 24 for supporting and bracing individual landing gear posts 23a and 23b. This arrangement allows the landing gears to be operated in tandem. Crank assembly 21 is operable to retract or extend shaft 20 and thereby raise or lower landing gear pad 19, as shown by arrow 43.

A carriage 26 supports and retains landing gear 18 in proper alignment with trailer 10a. Carriage 26 includes a base 36 that supports a landing gear 18 and a motive means 28, which may be an electric, pneumatic, or hydraulic motor.

Motor control 38 includes an actuator 39 by which an actuating or controlling signal 40 is coupled to the motive means to operate shafts 29a and 29b in either a first or a second rotational direction, depending on the direction in which the landing gear are to be moved. Each shaft extends through a journaled bearing 30 formed within carriage 26. The shafts operate toothed pinions 31a and 31b along complementarily toothed racks 34a and 34b to move base 36 (and landing gear 18) along the axis of trailer 10a. Other embodiments of the invention may substitute driven chains for racks 34a and 34b. The racks may be positioned facing downwardly, if desired, to prevent the accumulation of dirt that could interfere with rack and pinion operation.

Idler gears 32a and 32b, and 33a and 33b are provided to support the weight of the landing gear and carriage and to stabilize the carriage along support points to prevent rocking or excessive movement of the landing gear.

The landing gear are spaced from the trailer to prevent drag as they are slid along the axis of the trailer between the first landing gear position and the second landing gear position. Although a rack and rotating pinion transport mechanism is shown in Fig. 4, linearly extensible actuators may also be provided in other embodiments of the invention. In such other embodiments, the landing gear include flanges arranged to slide along the trailer axis on a bearing surface, preferably encoated with a non-stick material or lubricant. Other such devices may be used to move the landing gear relative to the trailer.

It is most important to note that the landing gear are readily moved along the trailer axis between a support position for carrying a containerized load and preventing its tipping during container loading or unloading, and a transport position for providing ample truck tractor rear wheel clearance when the trailer and load are transported on a highway. Such landing gear movement is shown in Fig. 3 by arrow 42.

Another embodiment of the invention combines the sliding landing gear with an extendable trailer of the type set forth in applicant's copending patent application Serial No. 491,142, filed 3 May 1983, for a "Universal Chassis For Shipping Containers" that may be used to accommodate containers of all sizes. In such embodiment, the landing gear are moved to various positions along the trailer axis depending upon the support requirements and center of gravity of the container carried by the extendable trailer.

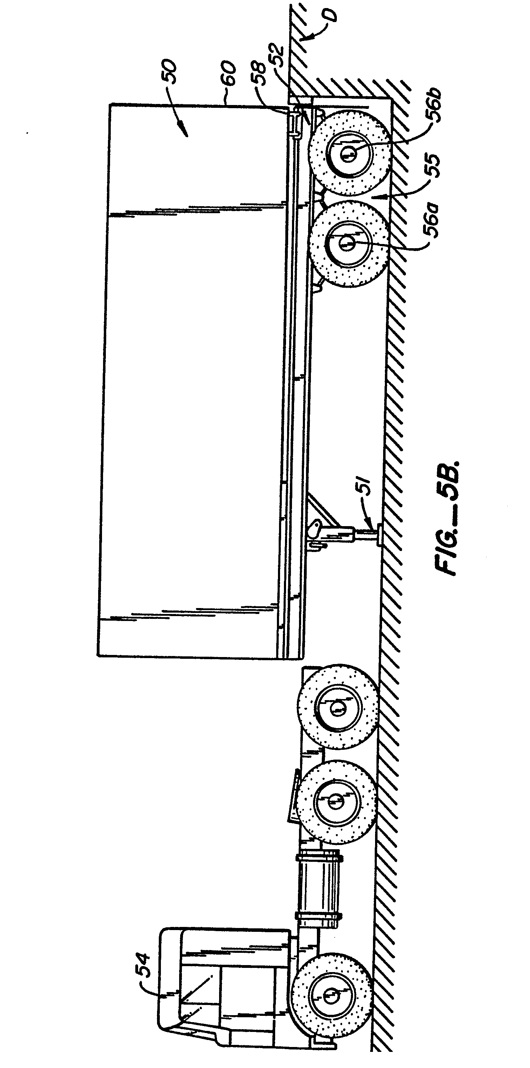

A side elevational schematic view of a truck tractor trailer and trailer/container combination showing in sequence operation of a second preferred embodiment of the present invention is shown in Fig. 5. A container 50 is supported by a trailer 52 which is towed by a truck tractor 54. A container rear portion 60 rests on a transverse cross brace 58, shown positioned central to rear wheel assembly 55 between a first axle and wheel combination 56a and a second axle and wheel combination 56b. In this configuration, the load of container 50 is evenly supported by both wheel and axle combinations 56a and 56b.

However, a rear trailer portion 62 produces a gap between the trailer rear portion 60 and loading dock D (Fig. 5A). The present invention solves this problem by sliding cross brace 58 rearwardly as indicated by arrow 59 until container rear portion 60 is flush with a rear portion of the trailer (Fig. 5B). In this way, there is no gap between the rear portion of the container and the loading dock, and loading is thus facilitated. In Fig. 5A, landing gear 51 is shown shifted rearwardly along the trailer axis to a transport position that provides ample truck tractor rear wheel clearance; Fig. 5B shows landing gear 51 shifted forwardly along the trailer axis to a support position that prevents trailer/container tipping by providing a balanced trailer center of gravity.

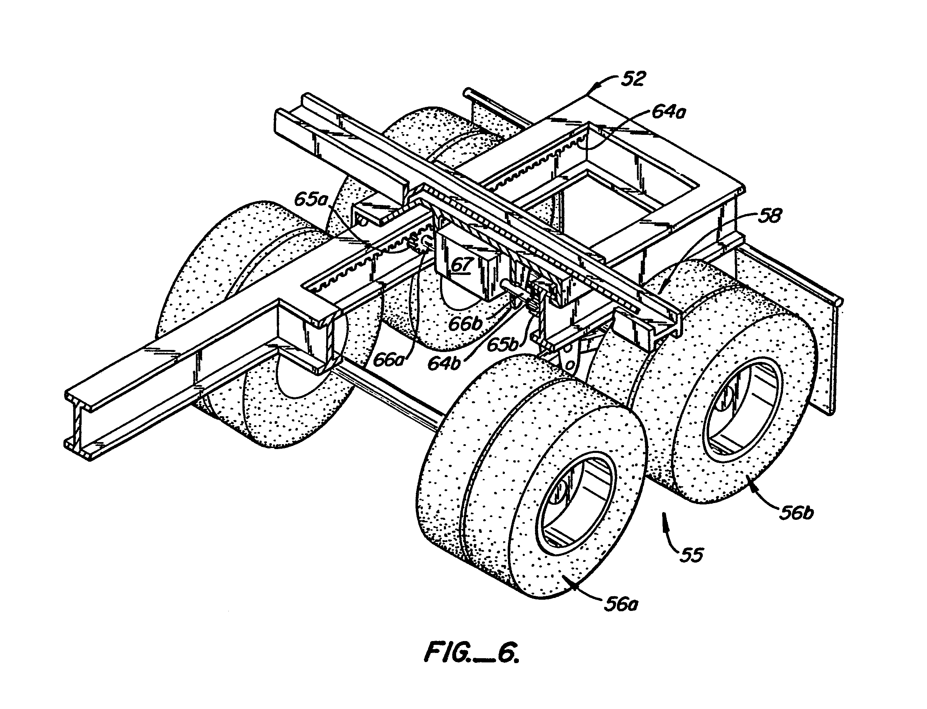

A perspective view of the second preferred embodiment of the present invention is shown in Fig. 6. Trailer 52 is shown including parallel racks 64a and 64b that extend along the axis of the trailer at a rear portion thereof. In other embodiments of the invention, driven chains may be substituted for racks 64a and 64b.

Transverse cross brace 58 is movable along the racks by cooperating engagement of cross brace associated pinions 65a and 65b with the rack. The pinions are rotated to effect movement of cross brace 58 by shafts 66a and 66b, which are driven by motive means 67, which may be an electric, pneumatic, or hydraulic motor.

Thus, the container may be shifted rearwardly to allow ready loading and unloading at a dock. Additionally, such rearward shifting of the load, correspondingly shifts the container's center of gravity rearwardly. Accordingly, landing gear 51 (Fig. 5) is effectively moved from a position near center along the container's axis to a position forward along the container's axis. In this way, the center of gravity is shifted and tipping of the trailer is prevented. Cooperation of sliding cross brace 58 and sliding landing gear 51 (Fig. 5) optimizes balanced trailer transport and trailer support while providing ready trailer access for container loading and unloading.

The invention is particularly well suited for operation in concert with an extendable trailer, as referenced above. For example, a front portion of the extendable trailer is arranged to telescope inwardly or outwardly in relation to the rear trailer portion as the container is shifted by the sliding cross brace from an over center position between wheel and axle assemblies 56a and 56b and a rearward position for docking for loading and unloading.

Although motive means are shown for both preferred embodiments of the invention, it is possible to use a hand crank assembly to effect movement of the landing gear and of the transverse cross brace. Additionally, although not shown, it is contemplated that any of the type of known locking device should be included to arrest movement of the landing gear and transverse cross brace when a desired position is obtained. Such locking mechanisms are necessary to prevent unnecessary shifting of the landing gear or of the container while the trailer and container are transported or docked for loading and unloading. A simple mechanism, such as a pin and corresponding aperture; or a more complicated mechanism, such as a piston and cylinder assembly, may be provided to effect locking of the landing gear and/or transverse cross brace. Both embodiments of the invention may be combined in a trailer, or the embodiments may be provided singly, as desired. Additionally, the rack and pinion drive shown may be replaced with a driven chain, screw drive, cylinder and piston, and so on.

CLAIMS

1. In a truck tractor trailer, an improved landing gear, comprising:

at least one retractable vertical landing gear having a support post selectively slidably movable along a trailer axis between a first trailer supporting position and a second trailer transporting position.

2. A landing gear for a truck tractor trailer of the type adapted to carry a containerized load, comprising: a pair of retractable vertical landing gear having support posts spaced one from the other transverse to said trailer and slidably movable in tandem along a trailer axis between a first trailer supporting position, at a sufficiently forward trailer portion to prevent trailer tipping during container loading and unloading, and a second trailer transporting position, at a sufficiently rearward trailer portion to allow unimpeded operation of said trailer in combination with a towing truck tractor; and motive means for slidably moving said landing gear support posts between said first position and said second position.

3. In a truck tractor trailer including a pair of retractable vertical landing gear having support posts spaced one from the other transverse to said trailer, the improvement comprising: slide means for effecting selective movement of said landing gear in tandem along a trailer axis between a first trailer supporting position and a second trailer transporting position.

4. A method for coupling a truck tractor to a trailer and container combination, comprising the steps of: backing said truck tractor to said trailer and container combination;

orienting a fifth wheel pin on said trailer with a fifth wheel coupler on said truck tractor; retracting a landing gear support pad within said landing gear to lower said trailer to said truck tractor to effect coupling therebetween; and sliding said landing gear assembly rearward of said trailer along a trailer axis to provide turning clearance for said truck tractor's rear wheels.

5. In a truck tractor trailer, an apparatus for shifting a containerized trailer load along a trailer axis, comprising:
a cross brace arranged transverse to said trailer axis at a rear portion thereof and selectively slidably movable along said trailer axis between a first load transporting position, wherein said container is in a balanced condition along said trailer, and a second docking and loading/unloading position, wherein said container is positioned at substantially a rearmost portion of said trailer along said trailer axis.

6. A method for docking a containerized trailer load at a loading facility, comprising the step of:
sliding said containerized load rearwardly along a trailer axis with a slidable cross brace until a rear portion of said container is at a rearmost extent of said trailer and in substantial alignment with said loading facility.

7. In a truck tractor trailer of the type adapted to carry a containerized load, the improvement comprising:
a pair of retractable vertical landing gear having support posts spaced one from the other transverse to said trailer and slidably movable in tandem along a trailer axis between a first trailer supporting position, at a sufficiently forward trailer portion to prevent trailer tipping during container loading

and unloading, and a second trailer transporting position, at a sufficiently rearward portion to allow unimpeded operation of said trailer in combination with a towing truck tractor;

motive means for slidably moving said landing gear support posts between said first position and said second position;

a cross brace positioned transverse to said trailer axis at a rear portion thereof and slidable along said trailer axis between a first cross brace trailer transporting position substantially between said trailer's two rear axles, and a second cross brace trailer docking position substantially at a rearmost portion of said trailer; and

cross brace motive means for slidably moving said cross brace between said first cross brace position and said second cross brace position.

1/6

0201615

**FIG.\_IA.** _PRIOR ART_

**FIG.\_IB.** _PRIOR ART_

**FIG.\_3A.**

FIG._2. (PRIOR ART)

FIG._5A.

*FIG.__3B.*

*FIG.__3C.*

*FIG.__3D.*

FIG.__4.

**FIG.__5B.**

FIG._6.

**European Patent Office**

**EUROPEAN SEARCH REPORT**

## DOCUMENTS CONSIDERED TO BE RELEVANT

| Category | Citation of document with indication where appropriate, of relevant passages | Relevant to claim | CLASSIFICATION OF THE APPLICATION (Int Cl³) |
|---|---|---|---|
| X | GB - A - 1 287 484 (STRICK CORP.) <br> * page 4, lines 7-35; figures 2,3, 20 * | 1-4 | B 60 P 1/64 <br> B 62 D 53/06 |
| A | GB - A - 1 287 484 | 7 | |
| A | EP - A - 0 123 723 (EXTENSIBLE DEVELOPMENT GROUP) <br> * claims 1,5; figure 7 * | 1-4,7 | |

**TECHNICAL FIELDS SEARCHED (Int Cl )**

B 60 P 1/00
B 62 D 53/00

| Place of search | Date of completion of the search | Examiner |
|---|---|---|
| BERLIN | 12-12-1985 | KRIEGER |

European Patent
Office

**0201615**

---

## CLAIMS INCURRING FEES

The present European patent application comprised at the time of filing more than ten claims

☐ All claims fees have been paid within the prescribed time limit. The present European search report has been drawn up for all claims

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

---

## LACK OF UNITY OF INVENTION

The Search Division considers that the present European patent application does not comply with the requirement of unity of invention and relates to several inventions or groups of inventions,

namely:

1. claims 1-4,7 (page 13,line 30 - page 14, line 7): Sliding landing gear

2. claims 5,6,7 (page 14, lines 8-17): Sliding cross brace

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims, 1-4,7 (page 13,line 30 - page 14, line 7)

namely claims: